# EUROPEAN PATENT APPLICATION

(11) **EP 4 206 764 A1**
(43) Date of publication of application: **05.07.2023**
(21) Application number: 22216071.5
(22) Date of filing: 22.12.2022
(51) Int. Cl.: G02B 6/02

(54) **MULTI-CORE FIBER AND MANUFACTURING METHOD THEREOF AND MULTI-CORE FIBER MARKER**

(30) Priority: 28.12.2021 IN 202111061332
(71) Applicant: Sterlite Technologies Limited, Haryana 122002 (IN)
(72) Inventor: Pandey, Anand, 122002 Gurugram (IN); Balakrishnan, Ranjith, 122002 Gurugram (IN)
(74) Representative: Petraz, Gilberto Luigi

(57) **Abstract**

The present disclosure relates to a multi-core fiber (MCF) (100) and a manufacturing method thereof. In particular, the multi-core fiber (MCF) (100) comprises a plurality of cores (102) and a marker (108), each core is associated with a core diameter (104) and a core-placement-radius (106). And, the marker (108) is associated with a marker diameter (110) and a marker-placement-radius (112). The marker diameter (110) is equal to a core diameter (104) and the marker-placement-radius (112) is different from the core-placement-radius (106). Additionally, the marker (108) has a marker core (116) and a marker clad (118).

## Description

### TECHNICAL FIELD

Embodiments of the present disclosure relate to the field of optical fibers and more particularly, relate to a multi-core fiber and manufacturing method thereof and a multi-core fiber marker.

The present application claims the benefit of Indian Application number 202111061332 titled "Multi-core fiber and manufacturing method thereof and multi-core fiber maker" filed by the applicant on 28/12/2021**,** which is incorporated herein by reference in its entirety.

### BACKGROUND ART

Telecommunications networks include access networks where end-user subscribers connect to service providers. With the advancement of science and technology, various modern technologies are being employed for communication purposes. Optical fiber cables are a critical component of a modern communication network across the globe. Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

As the data and data rate requirements are increasing, more optical fibers are required in the network to support higher capacity, bandwidth and speed. One of the solutions to address the requirement of capacity, bandwidth and speed is multicore optical fibers (MCF) that pack multiple cores in a single fiber and increases transmission density of the single fiber. A MCF typically comprises a central core surrounded by several satellite cores in a radial pattern surrounding the central core. Each of the central and satellite cores is potentially a light carrying path, and the MCF thus provides multiple parallel paths for optical signal transmission and/or reception in a single fiber.

A typical way of manufacturing an MCF is by using a rod-in-cylinder (RIC) method, in which holes are drilled in a cylindrical glass preform and then core rods and a marker rod are inserted in the holes. It is then collapsed to form an MCF glass preform, which is then drawn to manufacture the MCF. Typically, the MCF has a small diameter marker that enables correct identification of individual cores for joining (splicing).

Japanese patent application no. JP6966311B2 titled "Manufacturing method of multi-core optical fiber base material and manufacturing method of multi-core optical fiber" discloses a method for producing a multi-core optical fiber base material and a method for producing a multi-core optical fiber, which can suppress a decrease in the arrangement accuracy of each core of the multi-core optical fiber.

Japanese patent application no. JP6690348B2 titled "Multicore optical fiber manufacturing method" discloses a multi-core optical fiber manufacturing method for manufacturing a multi-core optical fiber comprising a plurality of cores each extending along a predetermined axis, and a common cladding covering each of the plurality of cores.

Japanese patent application no. JP2012168453A titled "Multi-core optical fiber, method of manufacturing multi-core optical fiber, and method of interconnecting multi-core optical fibers" discloses a multicore optical fiber having a plurality of cores in a single optical fiber cross section, a method for manufacturing the multicore optical fiber, and a method for connecting the multicore optical fibers.

However, there are a few drawbacks in the currently similar technologies providing an MCF manufactured by a rod-in-cylinder (RIC). In particular, drilling a small diameter marker hole places severe drilling restrictions on the depth and accuracy of drilled holes. Moreover, if the marker hole size is increased in the conventional RIC method, it decreases the thickness of a hollow handle. A decrease in the thickness of the hollow handle compromises the strength of the hollow handle and limits the weight the hollow handle can support. This, in turn, limits the size of the MCF glass preform and length of the MCF drawn. Moreover, the shape of the core rod inserted into the hole is easily distorted. Further, if the gap between the inner peripheral surface of the hole for inserting the core rod and the outer peripheral surface of the core rod is too small, it becomes difficult to insert the core rod into the hole.

Accordingly, to overcome the disadvantages of the prior art, there is an urgent need for a technical solution that overcomes the above-stated limitations in the prior arts. The present disclosure provides a method for manufacturing multi-core optical fiber.

### SUMMARY OF THE DISCLOSURE

Embodiments of the present disclosure relate to a multi-core fiber (MCF). In particular, the multi-core fiber (MCF) comprises a plurality of cores and a marker. Moreover, each core is associated with a core diameter and a core-placement-radius. Furthermore, the marker is associated with a marker diameter and a marker-placement-radius. Further, the marker diameter is equal to a core diameter.

According to a first aspect of the present disclosure, the marker-placement-radius is different from the core-placement-radius.

In accordance with an embodiment of the present disclosure, the marker has a marker core and a marker clad.

According to a second aspect, the marker has a Old ratio (ratio of diameter of clad to diameter of core) between 5 to 20 and is greater than D/d ratio (ratio of diameter of clad to diameter of core) of each of the plurality of cores.

In accordance with an embodiment of the present disclosure, the marker is doped with at least one of an up-dopant, a down-dopant, a colour dopant.

In accordance with an embodiment of the present disclosure, the marker is used to transmit light signals.

In accordance with an embodiment of the present disclosure, the multi-core fiber is drawn from an MCF preform assembly having a top hollow handle with a handle thickness attached on a top end of a glass preform that has a plurality of core holes corresponding to a plurality of core rods.

In accordance with an embodiment of the present disclosure, a marker hole corresponds to a marker rod, wherein the marker hole is at least partially covered by the top hollow handle of the handle thickness.

In accordance with an embodiment of the present disclosure, the MFC preform assembly is heated at a high temperature of more than 2000 °C during collapsing.

In accordance with an embodiment of the present disclosure, the marker is doped with a germanium up-dopant and a colour dopant.

In accordance with an embodiment of the present disclosure, the marker is doped with a germanium up-dopant, traces of a fluorine down-dopant and a colour dopant.

In accordance with an embodiment of the present disclosure, combination of the up-dopant, the down-dopant and the colour dopant is same for the marker and the plurality of cores.

In accordance with an embodiment of the present disclosure, combination of the up-dopant, the down-dopant, the colour dopant and the undoped region is same for the marker and the plurality of cores.

According to a third aspect, the method for manufacturing a multi-core fiber (MCF). In particular, the method for manufacturing an MCF glass preform comprises the steps of drilling a plurality of core holes and a marker hole in a glass preform, inserting a marker rod in the marker hole, joining, after inserting the marker rod, a top hollow handle at a top end of the glass preform such that a handle thickness at least partially covers the marker hole, inserting a plurality of core rods in the plurality of core holes to form a preform assembly, collapsing the preform assembly after the marker rod and the plurality of core rods are inserted and drawing the MCF glass preform to manufacture the multi-core fiber. In particular, the plurality of core holes and the marker hole are identical in dimensions.

According to the fourth aspect, the method comprises stretching the preform assembly prior to drawing.

In accordance with an embodiment of the present disclosure, the method comprises chamfering ends of each of the marker hole and the plurality of core holes.

The foregoing solutions of the present disclosure are attained by providing a multi-core fiber and manufacturing method thereof.

### BRIEF DESCRIPTION OF THE DRAWINGS

So that the manner in which the above-recited features of the present disclosure is understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.

The disclosure herein will be better understood from the following description with reference to the drawings, in which:
Fig. 1 is a cross-sectional view illustrating a multi-core fiber (MCF) in accordance with one embodiment of the present disclosure;
Fig. 2 is a front view illustrating a multi-core fiber (MCF) preform assembly in accordance with one embodiment of the present disclosure;
Fig. 3 is a flowchart illustrating a method of manufacturing a multi-core fiber (MCF) in accordance with one embodiment of the present disclosure;
Fig. 4 is a flowchart illustrating a method of manufacturing a multi-core fiber (MCF) in accordance with one embodiment of the present disclosure;
Fig. 5 is a flowchart illustrating a method of manufacturing a multi-core fiber (MCF) in accordance with one embodiment of the present disclosure.

### REFERENCE LIST

Multi-core fiber (MCF) - 100
Plurality of cores - 102
Core diameter - 104
Core-placement-radius - 106
Marker - 108
Marker diameter - 110
Marker-placement-radius - 112
Handle thickness - 114
Marker core - 116
Marker clad 118
Multi-core fiber (MCF) preform assembly - 200
Top hollow handle - 202
Multi-core fiber (MCF) glass preform - 204
Plurality of core holes - 206
Plurality of core rods 208
Marker hole - 210
Marker rod - 212

The Multi-core fiber (MCF) is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

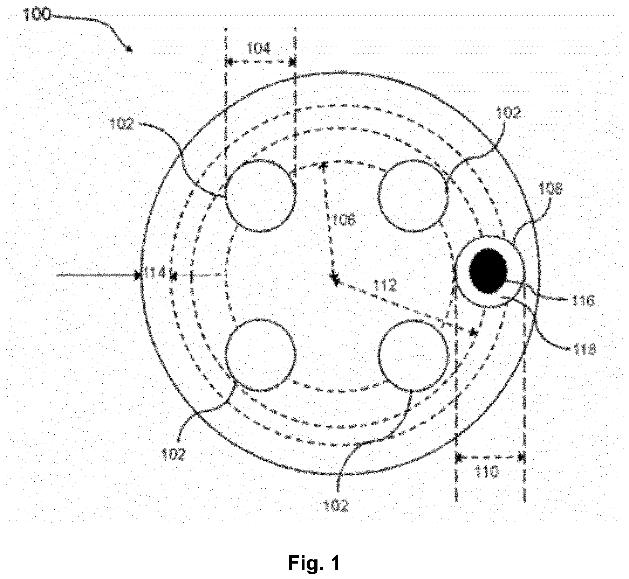

The principles of the present disclosure and their advantages are best understood by referring to FIGS.1 to FIGS. 5. In the following detailed description, numerous specific details are set forth in order to provide a thorough understanding of the embodiment of the disclosure as illustrative or exemplary embodiments of the disclosure, specific embodiments in which the disclosure may be practised are described in sufficient detail to enable those skilled in the art to practice the disclosed embodiments. However, it will be obvious to a person skilled in the art that the embodiments of the disclosure may be practised with or without these specific details. In other instances, well-known methods, procedures and components have not been described in detail so as not to unnecessarily obscure aspects of the embodiments of the disclosure.

The following detailed description is, therefore, not to be taken in a limiting sense, and the scope of the present disclosure is defined by the appended claims and equivalents thereof. The terms "comprising," "including," "having," and the like are synonymous and are used inclusively, in an openended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. References within the specification to "one embodiment," "an embodiment," "embodiments," or "one or more embodiments" are intended to indicate that a particular feature, structure, or characteristic described in connection with the embodiment is included in at least one embodiment of the present disclosure.

Although the terms first, second, etc. may be used herein to describe various elements, these elements should not be limited by these terms. These terms are generally only used to distinguish one element from another and do not denote any order, ranking, quantity, or importance, but rather are used to distinguish one element from another. Further, the terms "a" and "an" herein do not denote a limitation of quantity, but rather denote the presence of at least one of the referenced items.

The conditional language used herein, such as, among others, "can," "may," "might," "may," "e.g.," and the like, unless specifically stated otherwise, or otherwise understood within the context as used, is generally intended to convey that certain embodiments include, while other embodiments do not include, certain features, elements and/or steps.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Terms "marker 108" or "marker rod 108" are interchangeably used throughout the draft for convenience.

Terms "multi-core fiber (MCF) preform assembly 200" or "preform assembly 200" are interchangeably used throughout the draft for convenience.

Terms "glass preform 204" or multi-core fiber (MCF) glass preform 204" are interchangeably used throughout the draft for convenience.

Terms "top hollow handle 202" or "top handle 202" are interchangeably used throughout the draft for convenience.

Fig. 1 is a cross-sectional view illustrating a multi-core fiber (MCF) 100 in accordance with one embodiment of the present disclosure. In particular, the multi-core fiber (MCF) 100 comprises a plurality of cores 102 and a marker 108. Moreover, each of the plurality of cores 102 has a core diameter 104 and a core-placement-radius 106. Furthermore, the marker 108 has a marker diameter 110 and a marker-placement-radius 112 in a way that the marker diameter 110 is equal to the core diameter 104 and the marker-placement-radius 112 is different from the core-placement-radius 106. Further, the marker 108 has a marker core 116 and a marker clad 118 and may be used to transmit light signals. Additionally, the marker 108 is doped with at least one of an up-dopant, a down-dopant and a colour dopant.

In accordance with an embodiment of the present disclosure, the marker 108 is doped with an up-dopant such as germanium and a colour dopant. Alternatively, the marker 108 may be doped with an up-dopant such as germanium, with traces of a down-dopant such as fluorine and a colour dopant. There could be other combinations of an up-dopant, a down-dopant and a colour dopant possible for the marker 108. Moreover, the marker 108 and the plurality of cores 102 may use the same combination of an up-dopant, a down-dopant and a colour dopant. Further, the marker 108 and the plurality of cores 102 may use the same combination of an up-dopant, a down-dopant, a colour dopant, and an undoped region.

In accordance with an embodiment of the present disclosure, each of the marker 108 and the plurality of cores 102 have a D/d ratio of 5 to 20 such that the D/d ratio of the marker 108 is higher than the D/d ratio of each of the plurality of cores 102. In particular, D/d ratio is a ratio of diameter of clad to diameter of core. The D/d ratio is designed based on a waveguide design profile. Moreover, the D/d ratio of the marker 108 can be decided for identification of the plurality of cores 102.

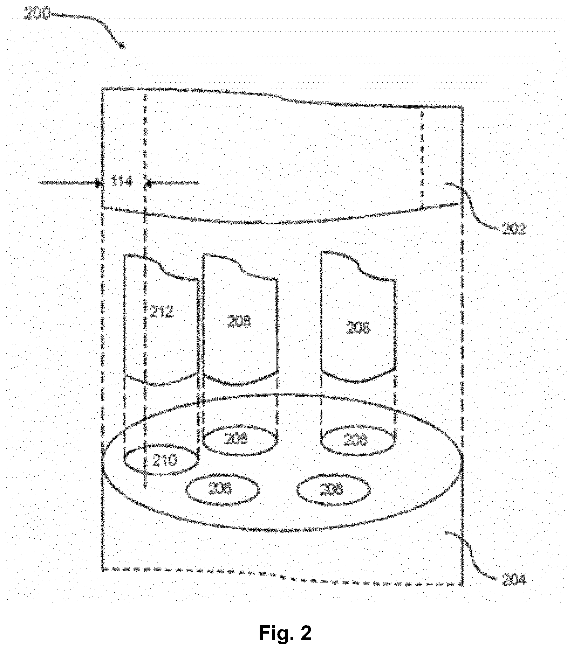

Fig. 2 is a front view illustrating a multi-core fiber (MCF) preform assembly 200 in accordance with one embodiment of the present disclosure. In particular, the multi-core fiber (MCF) preform assembly 200 comprises a plurality of core holes 206 and a marker hole 210 drilled into a glass preform 204. Moreover, the plurality of core holes 206 and the marker hole 210 are identical in dimensions such as diameter. Furthermore, a plurality of core rods 208 and a marker rod 212 are inserted into the plurality of core holes 206 and the marker hole 210 respectively.

In accordance with an embodiment of the present disclosure, ends of each of the marker hole 210 and the plurality of core holes 206 are chamfered. In particular, chamfering may be done to avoid shrinkage of a diameter of the marker hole 210 and the plurality of core holes 206 during joining a top hollow handle 202. Moreover, the MFC preform assembly 200 is collapsed/fused after insertion of the marker rod 212 and the plurality of core rods 208, causing formation of a monolith structure. During collapsing, the MFC preform assembly 200 is heated at a high temperature such as more than 2000 °C.

In accordance with an embodiment of the present disclosure, the glass preform 204 can be stretched in a heated environment for reducing structural defects in the glass preform 204. The glass preform 204 is then drawn to manufacture the multi-core fiber 100.

Further, the MCF preform assembly 200 comprises the top hollow handle 202 with a handle thickness 114 attached on a top end of the glass preform 204 having the plurality of core holes 206 corresponding to the plurality of core rods 208 and the marker hole 210 corresponding to the marker rod 212. Further, the top hollow handle 202 of the handle thickness 114 is joined at the top end of the glass preform 204 after insertion of the marker rod 212. Additionally, the marker hole 210 is at least partially covered by the top hollow handle 202 of the handle thickness 114.

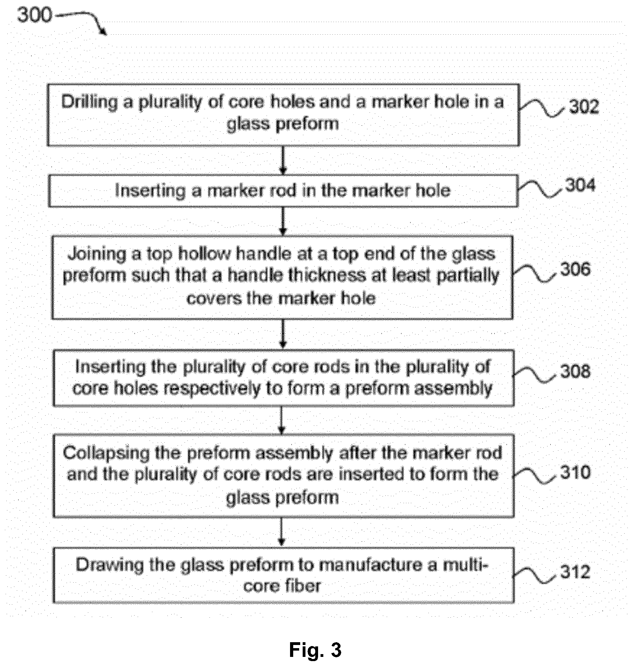

Fig. 3 is a flowchart illustrating a method 300 of manufacturing a multi-core fiber (MCF) 100 in accordance with one embodiment of the present disclosure. In particular, the multi-core fiber (MCF) 100 is manufactured by manufacturing the glass preform and drawing the glass preform. Method 300 starts at step 302 and proceeds to steps 304, 306, 308, 310, 312.

At step 302, the plurality of core holes 206 and the marker hole 210 are drilled in the glass preform 204. In particular, the plurality of core holes 206 and the marker hole 210 are identical in dimensions.

At step 304, the marker rod 212 is inserted in the marker hole 210.

At step 306, the top hollow handle 202 is joined at the top end of the glass preform 204 such that the handle thickness 114 at least partially covers the marker hole 210.

At step 308, the plurality of core rods 208 are inserted in the plurality of core holes 206 respectively to form the preform assembly 200.

At step 310, the preform assembly 200 is collapsed after the marker rod 212 and the plurality of core rods 208 are inserted to form the glass preform 204.

At step 312, the glass preform 204 is drawn to manufacture the multi-core fiber 100.

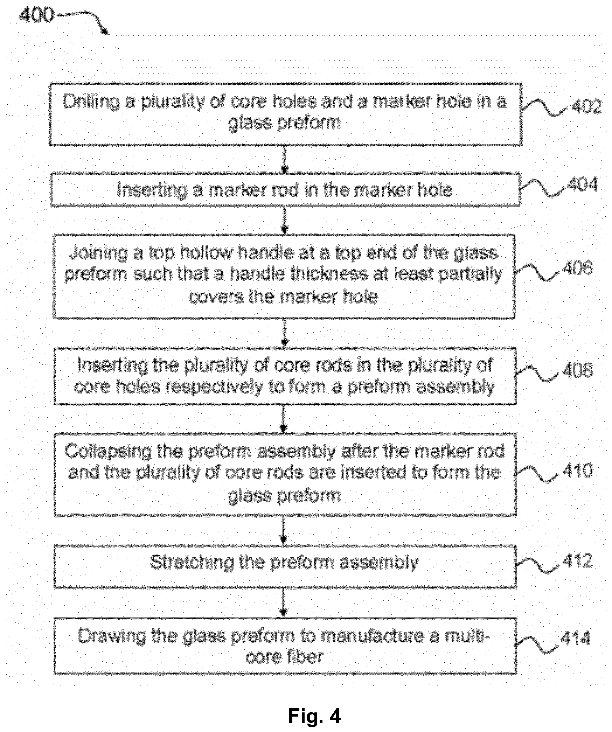

Fig. 4 is a flowchart illustrating a method 400 of manufacturing a multi-core fiber (MCF) 100 in accordance with one embodiment of the present disclosure. The multi-core fiber (MCF) 100 is manufactured by manufacturing the glass preform 204 and drawing the glass preform 204. Method 400 starts at step 402 and proceeds to steps 404, 406, 408, 410, 412, 414.

At step 402, the plurality of core holes 206 and the marker hole 210 are drilled in the glass preform 204. In particular, the plurality of core holes 206 and the marker hole 210 are identical in dimensions.

At step 404, the marker rod 212 is inserted in the marker hole 210.

At step 406, the top hollow handle 202 is joined at the top end of the glass preform 204 such that the handle thickness 114 at least partially covers the marker hole 210.

At step 408, the plurality of core rods 208 are inserted in the plurality of core holes 206 respectively to form the preform assembly 200.

At step 410, the preform assembly 200 is collapsed after the marker rod 212 and the plurality of core rods 208 are inserted to form the glass preform 204.

At step 412, the preform assembly 200 is stretched.

At step 414, the glass preform 204 is drawn to manufacture the multi-core fiber 100.

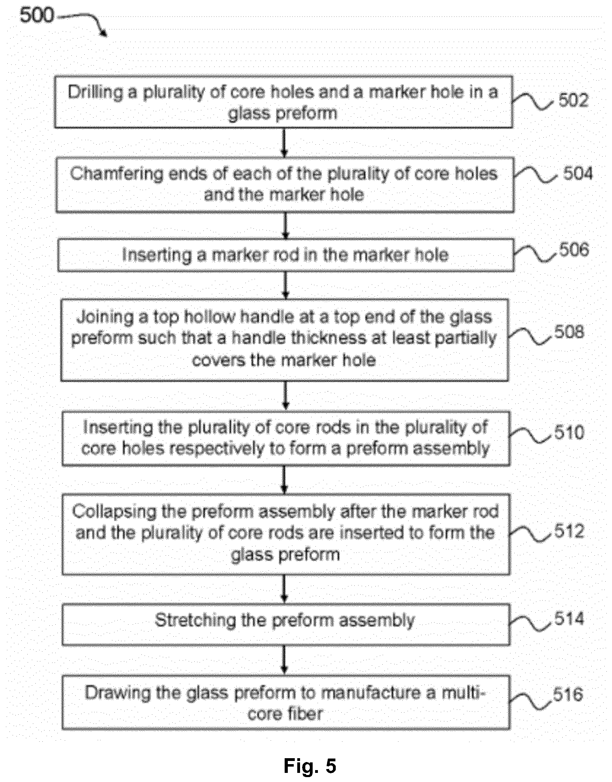

Fig. 5 is a flowchart illustrating a method 500 of manufacturing a multi-core fiber (MCF) 100 in accordance with one embodiment of the present disclosure. The multi-core fiber (MCF) 100 may be manufactured by manufacturing the glass preform 204 and drawing the glass preform 204. Method 500 starts at step 502 and proceeds to steps 504, 506, 508, 510, 512, 514, 516.

At step 502, the plurality of core holes 206 and the marker hole 210 are drilled in the glass preform 204. In particular, the plurality of core holes 206 and the marker hole 210 are identical in dimensions.

At step 504, the ends of each of the plurality of core holes 206 and the marker hole 210 are chamfered.

At step 506, the marker rod 212 is inserted in the marker hole 210.

At step 508, the top hollow handle 202 is joined at the top end of the glass preform 204 such that the handle thickness 114 at least partially covers the marker hole 210.

At step 510, the plurality of core rods 208 are inserted in the plurality of core holes 206 respectively to form the preform assembly 200.

At step 512, the preform assembly 200 is collapsed after the marker rod 212 and the plurality of core rods 208 are inserted to form the glass preform 204

At step 514, the preform assembly 200 is stretched.

At step 516, the glass preform 204 is drawn to manufacture the multi-core fiber 100.

It may be noted that the flowchart is explained to have above stated process steps; however, those skilled in the art would appreciate that the flowchart may have more/less number of process steps which may enable all the above stated implementations of the present disclosure. The various actions, acts, blocks, steps, or the like in the flow chart and sequence diagrams may be performed in the order presented, in a different order or simultaneously. Further, in some implementations, some of the actions, acts, blocks, steps, or the like may be omitted, added, modified, skipped, or the like without departing from the scope of the present disclosure.

Although only four cores 102 and one marker 108 have been illustrated in Fig. 1, it will be apparent to a person skilled in the art that the MCF 100 may have more or less number of cores and markers without limiting the scope of the present disclosure.

Although only a few core rods have been shown in Fig. 2 for illustration, it will be apparent to a person skilled in the art that the MCF 100 may have more or less number of core rods without limiting the scope of the present disclosure.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

## Claims

1. A multi-core fiber (MCF) (100) **characterized in that**:
a plurality of cores (102), wherein each core is associated with a core diameter (104) and a core-placement-radius (106); and
a marker (108), wherein the marker (108) is associated with a marker diameter (110) and a marker-placement-radius (112);
wherein the marker diameter (110) is equal to a core diameter (104).

2. The multi-core fiber (100) as claimed in claim 1, wherein the marker-placement-radius (112) is different from the core-placement-radius (106).

3. The multi-core fiber (100) as claimed in claim 1, wherein the marker (108) has a marker core (116) and a marker clad (118).

4. The multi-core fiber (100) as claimed in claim 1, wherein the marker (108) has a D/d ratio (ratio of diameter of clad to diameter of core) between 5 to 20 and is greater than D/d ratio (ratio of diameter of clad to diameter of core) of each of the plurality of cores (102).

5. The multi-core fiber (100) as claimed in claim 1, wherein the marker (108) is doped with at least one of an up-dopant, a down-dopant, a colour dopant.

6. The multi-core fiber (100) as claimed in claim 1, wherein the marker (108) is used to transmit light signals.

7. The multi-core fiber (100) as claimed in claim 1, wherein the multi-core fiber (100) is drawn from an MCF preform assembly (200) having a top hollow handle (202) with a handle thickness (114) attached on a top end of a glass preform (204) that has a plurality of core holes (206) corresponding to a plurality of core rods (208).

8. The multi-core fiber (100) as claimed in claim 1, wherein a marker hole (210) corresponds to a marker rod (212), wherein the marker hole (210) is at least partially covered by the top hollow handle (202) of the handle thickness (114).

9. The multi-core fiber (100) as claimed in claim 1, wherein the MFC preform assembly (200) is heated at a high temperature of more than 2000 °C during collapsing.

10. The multi-core fiber (100) as claimed in claim 1, wherein the marker (108) is doped with a germanium up-dopant and a colour dopant.

11. The multi-core fiber (100) as claimed in claim 1, wherein the marker (108) is doped with a germanium up-dopant, traces of a fluorine down-dopant and a colour dopant.

12. The multi-core fiber (100) as claimed in claim 1, wherein combination of the up-dopant, the down-dopant and the colour dopant is same for the marker (108) and the plurality of cores (102).

13. A method for manufacturing a multi-core fiber (MCF) (100), **characterized in that**:
manufacturing an MCF glass preform **characterized in that** steps of:
drilling a plurality of core holes (206) and a marker hole (210) in a glass preform (204), wherein the plurality of core holes (206) and the marker hole (210) are identical in dimensions;
inserting a marker rod (212) in the marker hole (210);
joining, after inserting the marker rod (212), a top hollow handle (202) at a top end of the glass preform (204) such that a handle thickness (114) at least partially covers the marker hole (210);
inserting a plurality of core rods (208) in the plurality of core holes (206) to form a preform assembly (200); and
collapsing the preform assembly (200) after the marker rod (212) and the plurality of core rods (208) are inserted; and
drawing the MCF glass preform to manufacture the multi-core fiber (100).

14. The method as claimed in claim 13, wherein the method comprising stretching the preform assembly (200) prior to drawing.

15. The method as claimed in claim 13, wherein the method comprising chamfering ends of each of the marker hole (210) and the plurality of core holes (206).
